# EUROPEAN PATENT APPLICATION

(11) **EP 4 501 506 A1**
(43) Date of publication of application: **05.02.2025**
(21) Application number: 23781009.8
(22) Date of filing: 30.03.2023
(51) Int. Cl.: B23B 29/12, B23Q 11/08, B23Q 17/20, B23Q 17/24

(54) **TURNING TOOL**

(30) Priority: 31.03.2022 JP 2022060966
(71) Applicant: Mitsubishi Materials Corporation, Tokyo 100-8117 (JP)
(72) Inventor: TAKAHASHI Wataru, Tokyo 100-8117 (JP); IMAI Yasuharu, Tokyo 100-8117 (JP)
(74) Representative: Hoffmann Eitle
(86) International application number: PCT/JP2023/013417
(87) International publication number: WO 2023/191001

(57) **Abstract**

A turning tool according to the present invention includes a tool main body (2) that extends along a tool axis (J) and that has a base (23d) at a tip portion on one side in an axial direction (Dj) along the tool axis (J), a cutting insert (4) detachably attached to the base (23d), and a camera provided in the tool main body (2) and configured to image a machined surface of a work material cut by the cutting insert (4), in which the camera is disposed to image an outer side in a radial direction (Dr) of the tool main body (2) intersecting with the axial direction (Dj).

## Description

### TECHNICAL FIELD

The present invention relates to a turning tool.

Priority is claimed on Japanese Patent Application No. 2022-060966, filed March 31, 2022, the content of which is incorporated herein by reference.

### BACKGROUND ART

When cutting using a machine tool such as a lathe or a machining center, it is desirable to check the state of a machined surface of a work material during machining in some cases. Patent Document 1 discloses a configuration including a camera that images a machined surface cut by a cutting tool (insert holder).

### [Citation List]

### [Patent Document]

[Patent Document 1]
Japanese Unexamined Patent Application, First Publication No. H9-229873

### SUMMARY OF INVENTION

### Technical Problem

In the above-described configuration, a camera is disposed outside a cutting device and is separate from the cutting device. Therefore, when a cutting edge is inserted into a hole formed in a work material when performing boring or the like on the work material, it is difficult to image the inner diameter surface of the hole, which is the machined surface machined by the cutting edge. Therefore, it is necessary to image the inner diameter surface of the hole after separating the cutting tool from the hole after cutting. In addition, it is difficult for illumination light from external light, indoor light or the like to reach the inside of the hole, which makes it difficult to check the machined surface even after machining.

The present invention has been made in view of the above-described circumstances, and an objective of the present invention is to provide a turning tool capable of satisfactorily checking the state of a machined surface of a workpiece.

### Solution to Problem

According to one aspect of the present invention, a turning tool is provided, including: a tool main body that extends along a tool axis and that has a base at a tip portion on one side in an axial direction along the tool axis; a cutting insert detachably attached to the base; and a camera provided in the tool main body and configured to image a machined surface of a work material cut by the cutting insert, in which the camera is disposed to image an outer side in a radial direction of the tool main body intersecting with the axial direction.

According to the turning tool of one aspect of the present invention, the camera is provided in the tool main body together with the cutting insert. The camera is disposed to image the outer side in the radial direction of the tool main body. With this configuration, even when the machined surface machined by the cutting insert is the inner diameter surface of the work material, the machined surface can be imaged. In addition, it is not necessary to secure a space for installing the camera and an illumination device separately from the tool main body. As a result, the state of the machined surface of the workpiece can be satisfactorily observed.

In the above-described turning tool, the camera may be configured to image the machined surface from a direction orthogonal to the machined surface of the work material on which cutting is performed by the cutting insert.

In this case, since the camera images the machined surface from a direction orthogonal to the machined surface, it is easier to more accurately check the state of the machined surface from the imaged image compared with a case where the machined surface is imaged from a direction inclined with respect to the machined surface.

In the above-described turning tool, the base may be disposed on a first side in the radial direction of the tool main body intersecting with the axial direction with respect to the tool axis, and the camera may be disposed on a second side in the radial direction with respect to the tool axis.

In this case, the base to which the cutting insert is attached, and the camera are disposed on opposite sides in the radial direction across the tool axis. Accordingly, chips generated by cutting the work material with the cutting insert can be prevented from reaching the camera. Therefore, it is possible to prevent the chips from interfering with imaging by the camera and from damaging the camera.

In the above-described turning tool, the camera may be disposed at the same position in the axial direction or may be disposed on the other side in the axial direction with respect to the cutting insert attached to the base.

In this case, when the camera is disposed at the same position as the cutting insert in the axial direction, the machined surface during the cutting by the cutting insert can be imaged in more real time. When the camera is disposed on the other side in the axial direction with respect to the cutting insert, the machined surface can be imaged while preventing chips generated by the cutting by the cutting insert from reaching the camera.

In the above-described turning tool, the turning tool may further include a distance sensor attached to the tip portion in the tool main body, and the camera may be disposed on the other side in the axial direction with respect to the distance sensor.

In this case, by providing the distance sensor, the machined surface machined using the cutting insert can be measured by the distance sensor. As described above, in a case where the distance sensor is provided, the camera is disposed on the other side in the axial direction with respect to the distance sensor. Accordingly, the camera can be brought close to the machining position by the cutting insert in the axial direction while the distance sensor is provided, and the machined surface can be satisfactorily imaged.

In the above-described turning tool, the turning tool may further include an illumination device provided in the tool main body and configured to illuminate the machined surface imaged by the camera, and the camera may be disposed between the base and the illumination device in the axial direction.

In this case, the illumination device is provided in the tool main body. Accordingly, by illuminating the machined surface imaged by the camera with the illumination device, the state of the machined surface can be imaged more clearly. The camera is disposed between the base and the illumination device. Accordingly, the machined surface illuminated by the illumination device can be imaged from a position closer to the machining position by the cutting insert in the axial direction. Therefore, the machined surface can be satisfactorily imaged.

In the above-described turning tool, the camera may be housed in a housing recess portion formed in the tool main body and may further include a camera cover mounted on the tool main body and that covers the housing recess portion and the camera, and the camera cover may have an outer peripheral inclined surface inclined outward in the radial direction from the illumination device side toward a lens portion side of the camera in the axial direction.

In this case, the camera is housed in the housing recess portion formed in the tool main body. The housing recess portion and the camera housed in the housing recess portion are covered by the camera cover. Accordingly, the camera can be prevented from being damaged by the chips generated during cutting. Since a cover member has an opening portion, the machined surface can be irradiated with the illumination light from the light source while suppressing damage to the light source. In addition, the camera cover has an outer peripheral inclined surface inclined outward in the radial direction from the illumination device side toward the lens portion side of the camera. Accordingly, the illumination light from the illumination device can be prevented from being blocked by the camera cover and the machined surface to be imaged by the camera can be satisfactorily illuminated.

### ADVANTAGEOUS EFFECTS OF INVENTION

According to the turning tool of one aspect of the present invention, the state of the machined surface of a workpiece can be satisfactorily checked.

### BRIEF DESCRIPTION OF DRAWINGS

FIG. 1 is a perspective view of a turning tool according to an embodiment of the present invention.
FIG. 2 is a plan view of the turning tool according to the embodiment of the present invention.
FIG. 3 is a perspective view of a head portion of the turning tool according to the embodiment of the present invention.
FIG. 4 is a cross-sectional view of the head portion according to the embodiment of the present invention.
FIG. 5 is a perspective view of the head portion according to the embodiment of the present invention when viewed from a different direction from that in FIG. 3.
FIG. 6 is a cross-sectional view showing a camera cover according to the embodiment of the present invention.
FIG. 7 is a view of the camera cover according to the embodiment of the present invention when viewed from an axial direction.

### DESCRIPTION OF EMBODIMENTS

Hereinafter, a turning tool 1 according to an embodiment of the present invention will be described with reference to the drawings. In the following drawings, in order to facilitate understanding of each configuration, the scale and number of respective structures may be different from those of an actual structure.

### <Turning Tool>

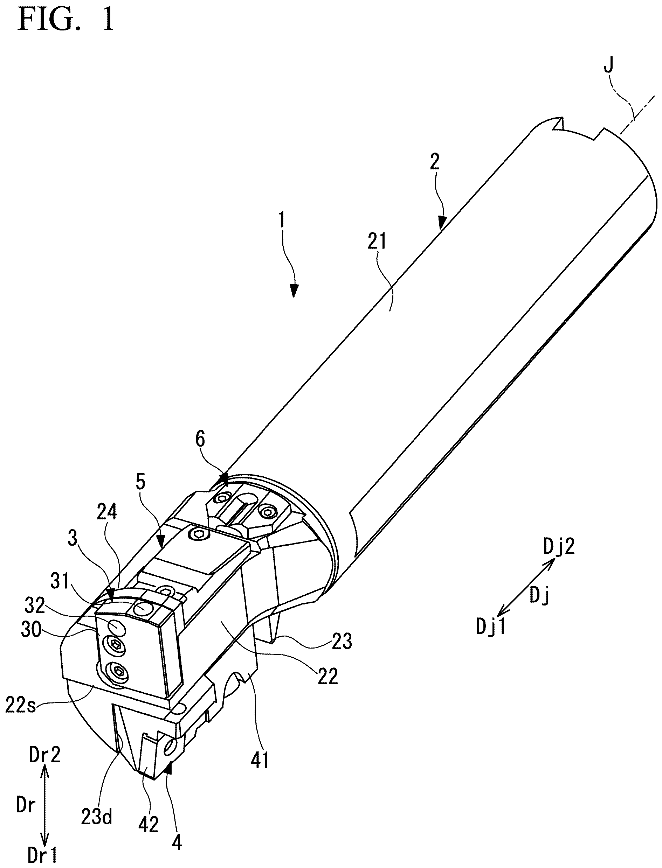

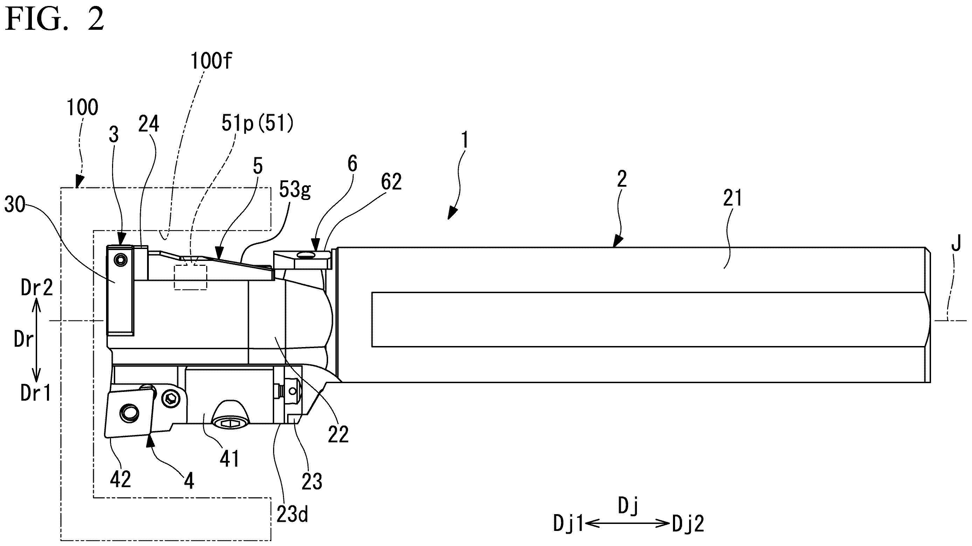

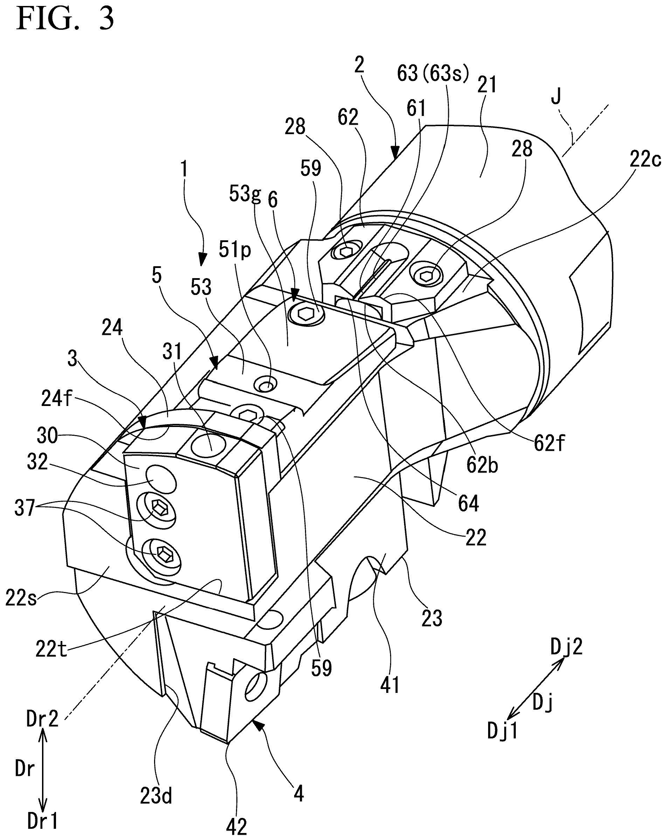

FIG. 1 is a perspective view of the turning tool 1 according to the embodiment. FIG. 2 is a plan view of the turning tool 1. FIG. 3 is a perspective view of a head portion 22 of the turning tool 1.

The turning tool 1 of the present embodiment performs turning machining such as boring on a work material 100 such as a metal material or the like rotated around a main spindle. A posterior end portion of the turning tool 1 is detachably held by a jig (cutter holder) (not shown). In addition, the jig which holds the turning tool 1 is fixed to a machine tool (lathe) such as a lathe (not shown).

As shown in FIGS. 1 to 3, the turning tool 1 of the present embodiment includes a tool main body 2, a cutting insert 4, a sensor device 3, an imaging device 5, and an illumination device 6.

The tool main body 2 extends in an axial direction Dj along a tool axis J. The tool main body 2 has a cylindrical shank portion 21 around the tool axis J, and the head portion 22 provided on one side Dj1 in the axial direction Dj of the tool main body 2 with respect to the shank portion 21.

The head portion 22 has a protruding portion 23 that protrudes outward in a radial direction Dr of the tool main body 2 intersecting with (preferably, orthogonal to) the axial direction Dj from an outer peripheral surface of the shank portion 21. A base 23d is provided in the protruding portion 23. An insert attachment 41 is attached to the base 23d. The insert attachment 41 holds the cutting insert 4. The base 23d and the cutting insert 4 attached to the base 23d are disposed in the tool main body 2 on a first side Dr1 (lower side in FIG. 2) in the radial direction Dr with respect to the tool axis J.

The cutting insert 4 has a rhombus shape when viewed from a thickness direction. The cutting insert 4 has a pair of main surfaces facing the thickness direction, and has a rhombus shape in plan view and a side surface that connects the pair of main surfaces to each other. A cutting edge 42 is provided at a ridge between the main surface and a side surface of the cutting insert 4. The cutting edge 42 is provided at a tip portion of the tool main body 2 on the one side Dj1 in the axial direction Dj. Part of the cutting edge 42 protrudes toward the one side Dj 1 in the axial direction Dj from the tool main body 2. In addition, the cutting edge 42 protrudes outward in the radial direction Dr of the tool main body 2. Therefore, part of the cutting edge 42 is positioned at a forefront end on the one side Dj 1 in the axial direction Dj and at an outermost end in the radial direction Dr of the tool main body 2.

In the present embodiment, the cutting insert 4 is fixed to the tool main body 2 via the insert attachment 41. For this reason, by changing the insert attachment 41, the cutting inserts 4 having various shapes can be fixed to the tool main body 2, and versatility of the tool main body 2 is improved.

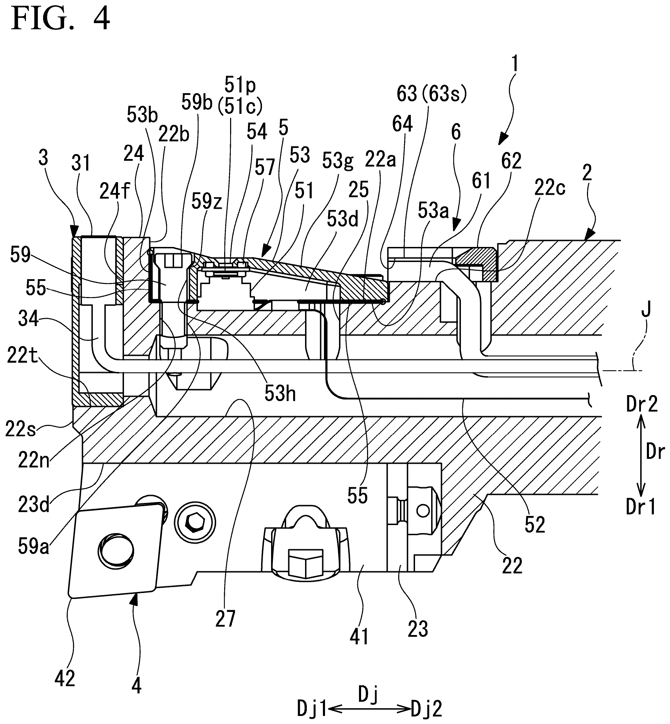

FIG. 4 is a cross-sectional view of the head portion 22.

As shown in FIGS. 3 and 4, the sensor device 3, the imaging device 5, and the illumination device 6 are provided in the head portion 22. The sensor device 3, the imaging device 5, and the illumination device 6 are disposed in the tool main body 2 on a second side Dr2 (upper side in FIG. 4) in the radial direction Dr with respect to the tool axis J. The second side Dr2 is preferably on the opposite side of the first side Dr1. That is, the sensor device 3, the imaging device 5, and the illumination device 6 are disposed on opposite sides of the base 23d and the cutting insert 4 attached to the base 23d across the tool axis J in the radial direction Dr of the tool main body 2.

The sensor device 3 includes a sensor bracket 30, a first distance sensor (distance sensor) 31, and a second distance sensor (distance sensor) 32. The sensor bracket 30 is attached to the tool main body 2. The first distance sensor 31 and the second distance sensor 32 are attached to the sensor bracket 30.

As shown in FIG. 4, a sensor support portion 24 is provided on the one side Dj1 in the axial direction Dj of the head portion 22. The sensor support portion 24 is formed at a position separated from a tip 22s of the head portion 22 on the one side Dj 1 in the axial direction Dj to the other side Dj2 in the axial direction Dj by a predetermined dimension. A positioning surface 22t, which is a flat surface facing the second side Dr2 in the radial direction Dr, is formed between the tip 22s and the sensor support portion 24. The sensor support portion 24 protrudes outward (toward the second side Dr2) in the radial direction Dr from the positioning surface 22t. The sensor support portion 24 includes a sensor support surface 24f that supports the sensor device 3, and a second surface 22b against which a camera cover 53, which will be described later, abuts. The sensor support surface 24f is a flat surface facing the one side Dj1 in the axial direction Dj. The second surface 22b is a flat surface facing the other side Dj2 in the axial direction Dj.

As shown in FIG. 3, the sensor bracket 30 is fastened to the sensor support surface 24f by a plurality of fixing screws 37. The sensor bracket 30 has a plate shape. The sensor bracket 30 holds the first distance sensor 31 and the second distance sensor 32. The first distance sensor 31 is disposed to face an outer side in the radial direction Dr. The first distance sensor 31 takes the outer side in the radial direction Dr as a measurement direction. The second distance sensor 32 is disposed to face the one side Dj1 in the axial direction Dj. The second distance sensor 32 measures a distance to an object to be measured disposed on the tip side of the tool main body 2. That is, the second distance sensor 32 takes the one side Dj1 in the axial direction Dj as a measurement direction.

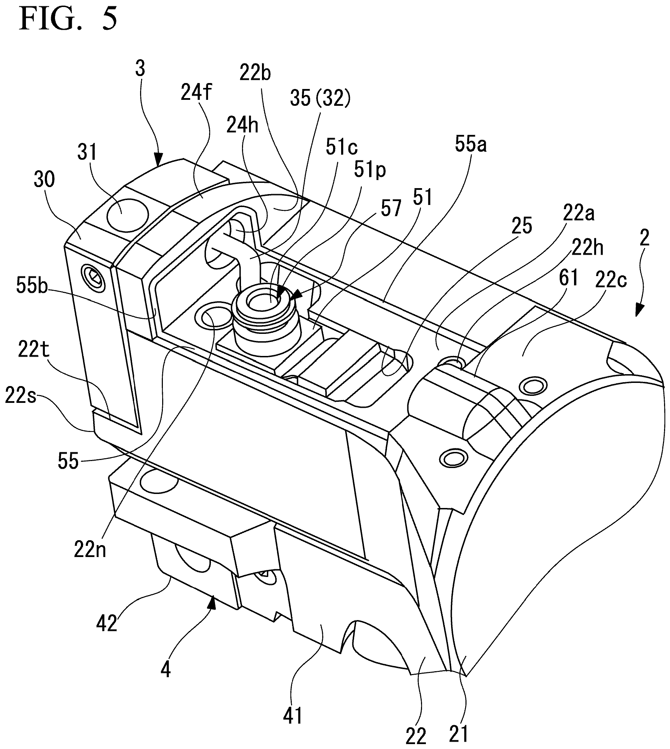

FIG. 5 is a perspective view of the head portion 22 when viewed from a different direction from that in FIG. 3. In FIG. 5, the head portion 22 in a state in which the camera cover 53 and a cover member 62 are removed is shown. As shown in FIG. 4, the first distance sensor 31 has a sensor cable 34. The sensor cable 34 of the first distance sensor 31 is led inward in the radial direction Dr from the first distance sensor 31. The sensor cable 34 is formed in the tool main body 2 and is housed in a housing hole 27 that extends in the axial direction Dj. As shown in FIG. 5, a sensor cable 35 of the second distance sensor 32 is led from the second distance sensor 32 to the other side Dj2 in the axial direction Dj. An insertion hole 24h opened to the second surface 22b is formed in the sensor support portion 24. The sensor cable 35 of the second distance sensor 32 extends from the sensor support portion 24 to the other side Dj2 in the axial direction Dj through the insertion hole 24h.

The first distance sensor 31 and the second distance sensor 32 measure a distance to a machined surface 100f machined using the cutting insert 4. The first distance sensor 31 measures the distance to the machined surface 100f which is machined by the cutting insert 4 and faces an inner side in the radial direction Dr. The second distance sensor 32 measures the distance to the machined surface 100f which is machined by the cutting insert 4 and faces the other side Dj2 in the axial direction Dj. In the present embodiment, for example, an eddy current sensor is used as the first distance sensor 31 and the second distance sensor 32. The eddy current sensor can perform accurate measurement even in a case where wet machining is performed. The eddy current sensor is likely to have stable measurement accuracy with respect to disturbances such as the surrounding environment. For this reason, regardless of selecting any one of wet machining and dry machining, the eddy current sensor is suitable for distance measurement in an environment with many disturbances after cutting compared with an optical distance sensor and the like.

The first distance sensor 31 and the second distance sensor 32 are used to measure the machined surface 100f after the turning tool 1 forms the machined surface 100f. Since the first distance sensor 31 and the second distance sensor 32 are provided in the tool main body 2, the machined surface 100f after cutting can be measured without temporarily separating the turning tool 1 from the work material 100. The time required for the measurement of the machined surface 100f in the turning can be shortened. In addition, the first distance sensor 31 can be used to measure the distance to the machined surface 100f which is machined by the cutting insert 4 and faces the inner side in the radial direction Dr, and the second distance sensor 32 can be used to measure the distance to the machined surface 100f which is machined by the cutting insert 4 and faces the other side Dj2 in the axial direction Dj. That is, during dimension measurement, dimension measurement of surfaces facing different directions can be performed without changing the direction of the work material 100, and a time required for the measurement step can be further shortened. The first distance sensor 31 can measure an outer diameter, an inner diameter, circularity, and the like, which are machined by the cutting insert 4. In addition, the second distance sensor can measure axial direction positions of the like of a stepped portion and a hole bottom portion machined by the cutting insert.

As shown in FIGS. 3 and 4, the imaging device 5 is provided in the head portion 22 of the tool main body 2. The imaging device 5 is disposed on the other side Dj2 in the axial direction Dj with respect to the sensor device 3 across the tool axis J. The imaging device 5 is disposed between the base 23d and the illumination device 6 in the axial direction Dj. As shown in FIG. 4, the imaging device 5 includes a camera 51, a camera cover 53, and a camera sealing member 57.

The camera 51 is, for example, a waterproof CMOS image sensor or a CCD image sensor. As shown in FIGS. 4 and 5, the camera 51 is housed in a housing recess portion 25 formed in the head portion 22 of the tool main body 2. The housing recess portion 25 is formed on a first surface 22a that faces the outer side (second side Dr2) in the radial direction Dr of the tool main body 2. The second surface 22b described above is formed to rise outward in the radial direction Dr from an end portion of the first surface 22a on the one side Dj1 in the axial direction Dj. The housing recess portion 25 is formed to be recessed inward in the radial direction Dr from the first surface 22a. As shown in FIG. 5, the sensor cable 35 of the second distance sensor 32, which extends from the sensor support portion 24 to the other side Dj2 in the axial direction Dj, is led to the housing hole 27 (refer to FIG. 4) formed inside the head portion 22 and the shank portion 21 through the housing recess portion 25.

The camera 51 has a lens portion 51p that faces an imaging target. The lens portion 51p has a lens incorporated into the camera (not shown), and a lens protective cover 51c that covers the lens and is exposed on the inner side of a camera aperture 54, which will be described later. The camera 51 is disposed such that the lens protective cover 51c of the lens portion 51p faces the outer side in the radial direction Dr. The camera 51 is disposed so as to be able to image the outer side in the radial direction Dr of the tool main body 2, specifically on a side facing the first surface 22a. As shown in FIG. 2, the camera 51 images the machined surface 100f of the work material 100 cut by the cutting insert 4, which faces the inner side in the radial direction Dr, that is, a so-called inner diameter surface.

As shown in FIG. 4, the camera 51 is disposed on the other side Dj2 in the axial direction Dj with respect to the cutting insert 4 attached to the base 23d. However, it is preferable that the camera 51 be disposed at a position as close as possible to the machining position of the machined surface 100f machined by the cutting insert 4 in the axial direction Dj. Accordingly, the state of the machined surface 100f after machining can be imaged from a closer position. In addition, for example, in a case where the sensor device 3 is disposed at a different position from that described above, the camera 51 may be positioned at the same position in the axial direction Dj with respect to the cutting insert 4. Accordingly, the machined surface 100f during or after cutting by the cutting insert 4 can be imaged from a closer position.

The camera 51 has a camera cable 52. The camera cable 52 is housed in the housing hole 27 formed inside the head portion 22 and the shank portion 21, together with the sensor cables 34 and 35.

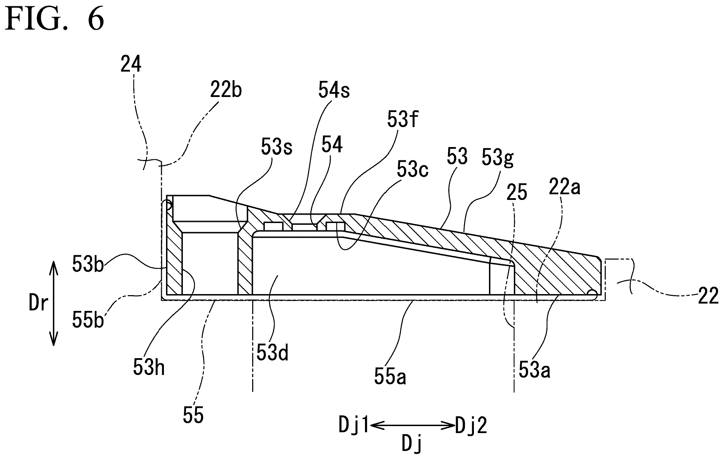

FIG. 6 is a cross-sectional view showing the camera cover 53.

The camera cover 53 is mounted in the head portion 22 of the tool main body 2. The camera cover 53 covers the housing recess portion 25 and the camera 51. As shown in FIGS. 4 and 6, the camera cover 53 has a first facing surface 53a that faces the inner side in the radial direction Dr and faces the first surface 22a, and a second facing surface 53b that faces the one side Dj 1 in the axial direction Dj and faces the second surface 22b. The camera cover 53 covers the camera 51 and the housing recess portion 25 by disposing the first facing surface 53a to face an outer peripheral portion of the housing recess portion 25 in which the camera 51 is housed. The second facing surface 53b of the camera cover 53 is positioned to face the second surface 22b of the sensor support portion 24.

As shown in FIGS. 4 to 6, a sealing member 55 is sandwiched between the camera cover 53 and the head portion 22 of the tool main body 2. The sealing member 55 is annularly continuous as a whole. The sealing member 55 has a first sealing portion 55a and a second sealing portion 55b. The first sealing portion 55a extends along the first surface 22a and is sandwiched between the first surface 22a and the first facing surface 53a. The first sealing portion 55a is formed to be bent in a U shape when viewed from the outer side in the radial direction Dr. The first sealing portion 55a extends along three sides of the outer peripheral portion of the housing recess portion 25, excluding one side on the one side Dj 1 of the axial direction Dj.

The second sealing portion 55b is continuous with the first sealing portion 55a. The second sealing portion 55b rises outward in the radial direction Dr from an end portion of the first sealing portion 55a on the one side Dj1 in the axial direction Dj. The second sealing portion 55b extends along the second surface 22b and is sandwiched between the second surface 22b and the second facing surface 53b. The second sealing portion 55b is formed to be bent into a U shape when viewed from the axial direction Dj. The second sealing portion 55b extends along the remaining three sides of the second surface 22b, excluding one side on the inner side in the radial direction Dr.

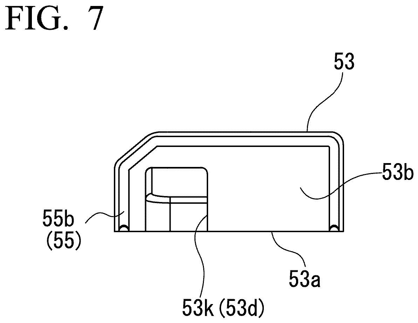

FIG. 7 is a view of the camera cover 53 when viewed from the axial direction Dj.

As shown in FIG. 7, the camera cover 53 has a cable housing portion 53d that houses the sensor cable 35 extending from the insertion hole 24h to the other side Dj2 in the axial direction Dj. The cable housing portion 53d is formed to be recessed outward in the radial direction Dr from the first facing surface 53a. A cable introduction opening 53k that communicates with an end portion of the cable housing portion 53d on the one side Dj1 in the axial direction Dj is formed on the second facing surface 53b at a position facing the insertion hole 24h in the axial direction Dj. The second sealing portion 55b is disposed to surround the insertion hole 24h and the cable introduction opening 53k.

As shown in FIG. 3, the camera cover 53 is fixed to the tool main body 2 by, for example, two bolts 59. As shown in FIGS. 4 and 5, screw holes 22n, into which the respective bolts 59 are screwed, are formed at predetermined positions on the first surface 22a of the head portion 22. As shown in FIG. 4, each bolt 59 integrally includes a screw shaft portion 59a and a screw head portion 59b. The screw shaft portion 59a is screwed into the screw hole 22n through a bolt insertion hole 53h formed in the camera cover 53. The screw head portion 59b is formed at one end of the screw shaft portion 59a. The screw head portion 59b is formed with a larger diameter than the screw shaft portion 59a. A seat surface 59z of the screw head portion 59b is formed in a tapered shape such that the diameter dimension gradually increases along a direction in which the screw shaft portion 59a extends from the screw shaft portion 59a.

As shown in FIGS. 4 and 6, in the bolt insertion hole 53h formed in the camera cover 53, an inclined surface 53s is formed in a tapered shape such that the hole diameter gradually increases from the inner side to the outer side in the radial direction Dr. When the screw shaft portion 59a of the bolt 59 is screwed into the screw hole 22n through the bolt insertion hole 53h, the seat surface 59z of the screw head portion 59b abuts on the inclined surface 53s. When the bolt 59 is fastened with a predetermined torque, the seat surface 59z and the inclined surface 53s abut on each other, so that the camera cover 53 is fixed at a predetermined position.

When the bolt 59 is fastened, first, the first facing surface 53a of the camera cover 53 is placed on the first sealing portion 55a of the sealing member 55 aligned with the first surface 22a, and the second facing surface 53b is aligned with the second sealing portion 55b aligned with the second surface 22b. In this state, the second facing surface 53b and the second surface 22b are separated from each other by the thickness of the second sealing portion 55b in the axial direction Dj. When the bolt 59 is fastened, the seat surface 59z presses the inclined surface 53s inward in the radial direction Dr, the first facing surface 53a and the first surface 22a are brought into close contact with each other, and thus the first sealing portion 55a is crushed. In addition, in a state in which the bolt 59 is completely fastened and the seat surface 59z abuts against the inclined surface 53s, the camera cover 53 is brought into close contact with the second facing surface 53b and the second surface 22b, and the second sealing portion 55b is crushed. That is, in the process of fastening the bolt 59, when the seat surface 59z abuts on the inclined surface 53s, the camera cover 53 is displaced to the one side Dj1 in the axial direction Dj, the second facing surface 53b is pressed toward the second surface 22b, and the second sealing portion 55b is crushed. In this way, the camera cover 53 can be attached to the tool main body 2 only by fastening the bolt 59 along the radial direction Dr such that the camera cover is pressed against both the first surface 22a and the second surface 22b. Therefore, the sealing property between the camera cover 53 and the tool main body 2 is enhanced by the sealing member 55.

The camera cover 53 has a camera aperture 54 positioned to face the lens portion 51p of the camera 51. The camera aperture 54 penetrates the camera cover in a direction connecting the first facing surface 53a, which faces the housing recess portion 25 side, and a cover outer peripheral surface 53f, which faces the opposite side of the first facing surface 53a (outer side in the radial direction Dr) in the camera cover 53. The lens portion 51p is disposed on the inner side of the camera aperture 54 and performs imaging through the camera aperture 54.

As shown in FIG. 6, the camera aperture 54 has an aperture inclined surface 54s formed in a tapered shape in which the radial dimension of the camera aperture 54 gradually increases from the housing recess portion 25 side on the inner side in the radial direction Dr toward the cover outer peripheral surface 53f side on the outer side in the radial direction Dr. In the present embodiment, the aperture inclined surface 54s is continuously formed along the entire circumference of the aperture 54 in a circumferential direction. The aperture inclined surface 54s may be formed on at least part of the periphery of the camera aperture 54. In the use state of the turning tool 1, at least the aperture inclined surface 54s may be formed at a position on the lower side with respect to the camera aperture 54. Accordingly, when a liquid coolant (coolant) to be supplied to the periphery of the cutting insert 4 during the cutting enters the camera aperture 54, the coolant easily flows out from the camera aperture 54 to the outside.

As shown in FIG. 4, the camera sealing member 57 is sandwiched between the lens portion 51p of the camera 51 and an outer peripheral portion of the camera aperture 54. The camera sealing member 57 has an annular shape and is formed of a so-called O-ring. The camera sealing member 57 is formed of an elastic material such as a rubber-based material. The camera sealing member 57 is sandwiched between the lens portion 51p and the camera cover 53 to suppress the intrusion of the coolant from the camera aperture 54 into the camera cover 53.

As shown in FIG. 6, the camera cover 53 includes a cover side recess portion 53c that houses the camera sealing member 57. The camera sealing member 57 is housed in the cover side recess portion 53c to suppress the misalignment of the camera sealing member 57 and the camera 51.

As shown in FIG. 2, the illumination device 6 is provided in the tool main body 2 and illuminates the machined surface 100f to be imaged by the camera 51. As shown in FIGS. 3 and 4, the illumination device 6 is disposed on the other side Dj2 in the axial direction Dj with respect to the camera 51 of the imaging device 5. Accordingly, the camera 51 of the imaging device 5 is disposed between the distance sensors 31 and 32 of the sensor device 3 and the illumination device 6 in the axial direction Dj. The illumination device 6 includes a light source 61 and a cover member 62.

The light source 61 is a light-emitting element such as an LED. As shown in FIG. 5, the light source 61 is disposed on a third surface 22c that faces the outer side in the radial direction Dr in the head portion 22. The third surface 22c may be continuous with the first surface 22a, but in the present embodiment, the third surface 22c is formed to have a step difference with the first surface 22a in the radial direction Dr.

As shown in FIG. 3, the cover member 62 is fixed to the third surface 22c of the tool main body 2 by a bolt 28. The cover member 62 covers at least part of the light source 61. The cover member 62 fixes the light source 61 by sandwiching the light source 61 between the cover member 62 and the head portion 22.

The cover member 62 has an opening portion 63 through which the illumination light from the light source 61 passes. The opening portion 63 penetrates the cover member 62 in a direction connecting a cover back surface 62b facing the light source 61 side and a cover front surface 62f facing the side opposite to the light source 61. In the present embodiment, the opening portion 63 is a slit 63s. The slit 63s is formed to extend along the axial direction Dj. The opening portion 63 is not necessarily the slit 63s, but may be a hole. The slit 63s is formed such that the position in the circumferential direction around the tool axis J coincides with the camera 51. The slit 63s is formed in a tapered shape in which the opening dimension gradually increases from the cover back surface 62b side toward the cover front surface 62f side when viewed from the axial direction Dj.

The machined surface 100f on the outer side in the radial direction Dr is irradiated with the illumination light from the light source 61 through the opening portion 63. The slit 63s is formed in a tapered shape when viewed from the axial direction Dj, so that the illumination light passing through the slit 63s is radially diffused. Accordingly, a wider area of the machined surface 100f is irradiated with the illumination light.

In addition, the cover member 62 includes a camera side opening portion 64 at an end portion on the one side Dj1 in the axial direction Dj. The camera side opening portion 64 is opened toward the one side Dj1 in the axial direction Dj. The camera side opening portion 64 is formed to allow some of the illumination light from the light source 61 to pass therethrough. Accordingly, some of the illumination light from the light source 61 is emitted to the camera 51 side on the one side Dj1 in the axial direction Dj through the camera side opening portion 64.

As shown in FIGS. 3 and 4, the camera cover 53 is adjacent to the cover member 62 on the one side Dj 1 in the axial direction Dj. The camera cover 53 has an outer peripheral inclined surface 53g inclined outward in the radial direction Dr from the illumination device 6 side toward the lens portion 51p side (camera aperture 54 side) of the camera 51 in the axial direction Dj. Accordingly, the illumination light from the illumination device 6 can be prevented from being blocked by the camera cover 53.

### [Operational Effects Achieved by Present Embodiment]

According to the turning tool of the present embodiment described above, the camera 51 is provided in the tool main body 2 together with the cutting insert 4. The camera 51 is disposed so as to able to image the outer side in the radial direction Dr of the tool main body 2. With this configuration, even when the machined surface 100f is the inner diameter surface of the work material 100, the machined surface 100f can be imaged. In addition, it is not necessary to secure a space for installing the camera 51 and the illumination device 6 separately from the tool main body 2. As a result, the state of the machined surface 100f of the work material 100 can be satisfactorily observed.

In addition, in the present embodiment, since the camera 51 images the machined surface 100f from a direction orthogonal to the machined surface 100f, it is easier to more accurately check the state of the machined surface 100f from the imaged image compared with a case where the machined surface 100f is imaged from a direction inclined with respect to the machined surface 100f.

In addition, in the present embodiment, the base 23d to which the cutting insert 4 is attached and the camera 51 are disposed on opposite sides in the radial direction Dr across the tool axis J. Accordingly, the chips generated by cutting the work material 100 with the cutting insert 4 can be prevented from reaching the camera 51. Therefore, it is possible to prevent the chips from interfering with imaging by the camera 51 and from damaging the camera 51.

In addition, in the present embodiment, the camera 51 is disposed on the other side Dj2 in the axial direction Dj with respect to the cutting insert 4. As a result, the machined surface 100f can be imaged while preventing the chips generated by cutting by the cutting insert 4 from reaching the camera 51. In addition, when the camera 51 is positioned at the same position in the axial direction Dj with respect to the cutting insert 4, the machined surface 100f cut by the cutting insert 4 can be imaged from a closer position.

In addition, in the present embodiment, by providing the distance sensors 31 and 32, the machined surface 100f, which is machined using the cutting insert 4, can be measured by the distance sensors 31 and 32. The camera 51 is disposed on the other side Dj2 in the axial direction Dj with respect to the distance sensors 31 and 32. As a result, the camera 51 can be brought close to the machining position by the cutting insert 4 in the axial direction Dj while the distance sensors 31 and 32 are provided, and the machined surface 100f can be satisfactorily imaged.

In addition, in the present embodiment, the illumination device 6 is provided in the tool main body 2. As a result, by illuminating the machined surface 100f imaged by the camera 51 with the illumination device 6, the state of the machined surface 100f can be more clearly imaged. The camera 51 is disposed between the base 23d and the illumination device 6. As a result, the machined surface 100f illuminated by the illumination device 6 can be imaged from a position closer to the machining position by the cutting insert 4 in the axial direction Dj. Therefore, the machined surface 100f can be satisfactorily imaged.

In addition, in the present embodiment, the camera 51 is housed in the housing recess portion 25 formed in the tool main body 2. The housing recess portion 25 and the camera 51 housed in the housing recess portion 25 are covered with the camera cover 53. As a result, the camera 51 can be prevented from being damaged by the chips generated during cutting. Since the cover member 62 has the opening portion 63, the machined surface 100f can be irradiated with the illumination light from the light source 61 while suppressing damage to the light source 61. In addition, the camera cover 53 has the outer peripheral inclined surface 53g. As a result, the illumination light from the illumination device 6 is prevented from being blocked by the camera cover 53, and the machined surface 100f to be imaged by the camera 51 can be satisfactorily illuminated.

### [Other Configurations Included in Present Invention]

The present invention is not limited to the above-described embodiment. The configurations (constituent elements) described in the above-described embodiment, modification examples, supplements, and the like may be combined, and additions, omissions, substitutions, and other changes in configuration can be made without departing from the gist of the present invention. Furthermore, the present invention is not limited to the above-described embodiment, but is limited only to the scope of claims.

### [Industrial Applicability]

According to the present invention, the state of a machined surface of a workpiece can be satisfactorily checked.

### REFERENCE SIGNS LIST

1: Turning tool
2: Tool main body
4: Cutting insert
6: Illumination device
23d: Base
25: Housing recess portion
31: First distance sensor (distance sensor)
32: Second distance sensor (distance sensor)
51: Camera
51p: Lens portion
53: Camera cover
53g: Outer peripheral inclined surface
100: Work material
100f: Machined surface
Dj: Axial direction
Dj 1: One side
Dj2: Other side
Dr: Radial direction
Dr1: First side
Dr2: Second side
J: Tool axis

## Claims

1. A turning tool comprising:
a tool main body that extends along a tool axis and that has a base at a tip portion on one side in an axial direction along the tool axis;
a cutting insert detachably attached to the base; and
a camera provided in the tool main body and configured to image a machined surface of a work material cut by the cutting insert,
wherein the camera is disposed to image an outer side in a radial direction of the tool main body intersecting with the axial direction.

2. The turning tool according to Claim 1,
wherein the camera images the machined surface from a direction orthogonal to the machined surface of the work material cut by the cutting insert.

3. The turning tool according to Claim 1 or 2,
wherein the base is disposed on a first side in the radial direction of the tool main body intersecting with the axial direction with respect to the tool axis, and
the camera is disposed on a second side in the radial direction with respect to the tool axis.

4. The turning tool according to any one of Claims 1 to 3,
wherein the camera is disposed at the same position in the axial direction or is disposed on the other side in the axial direction with respect to the cutting insert attached to the base.

5. The turning tool according to any one of Claims 1 to 4, further comprising:
a distance sensor attached to the tip portion in the tool main body,
wherein the camera is disposed on the other side in the axial direction with respect to the distance sensor.

6. The turning tool according to any one of Claims 1 to 5, further comprising:
an illumination device provided in the tool main body and configured to illuminate the machined surface imaged by the camera,
wherein the camera is disposed between the base and the illumination device in the axial direction.

7. The turning tool according to Claim 6,
wherein the camera is housed in a housing recess portion formed in the tool main body,
the camera further includes a camera cover mounted on the tool main body and that covers the housing recess portion and the camera, and
the camera cover has an outer peripheral inclined surface inclined outward in the radial direction from the illumination device side toward a lens portion side of the camera in the axial direction.
